(19) Europäisches Patentamt
European Patent Office
Office européen des brevets

(11) **EP 2 468 394 A1**

(12) **EUROPEAN PATENT APPLICATION**

(43) Date of publication:
**27.06.2012 Bulletin 2012/26**

(51) Int Cl.:
***B01J 8/06*** (2006.01)

(21) Application number: **10196716.4**

(22) Date of filing: **23.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Shell Internationale Research
Maatschappij B.V.
2596 HR The Hague (NL)**

(72) Inventors:
• **Bezemer, Gerrit Leendert
1031 HW Amsterdam (NL)**
• **Remans, Thomas Joris
1031 HW Amsterdam (NL)**
• **Zander, Jan Volkert
1031 HW Amsterdam (NL)**

(54) **Multi-tubular fixed bed reactor and its use**

(57)     The invention provides a multi-tubular fixed bed reactor for preparing hydrocarbons comprising a plurality of reactor tubes which include a fixed bed of catalyst particles, which tubes are at least partially surrounded by one or more cooling media, wherein the temperature of one or more cooling media present in the upstream part of the reactor is at least 5 °C lower that the temperature of one or more cooling media present in the downstream part of the reactor. The invention further relates to the use of said multi-tubular fixed bed reactor for performing a process for preparing hydrocarbons, and a process for preparing hydrocarbons in which such a multi-tubular fixed bed reactor is applied.

FIG. 1

EP 2 468 394 A1

**Description**

Field of the invention

The present invention relates to a multi-tubular fixed bed reactor, the use of the reactor for performing a process for preparing hydrocarbons, in particular a Fischer-Tropsch process, and such a process in which the reactor is applied.

Background of the invention

The Fischer-Tropsch process can be used for the conversion of hydrocarbonaceous feed-stocks into normally liquid and/or solid hydrocarbons (0 °C, 1 bar). The feed stock (e.g. natural gas, associated gas, coal-bed methane, residual oil fractions, biomass and/or coal) is converted in a first step into a mixture of hydrogen and carbon monoxide. This mixture is often referred to as synthesis gas or syngas. The synthesis gas is fed into a reactor where it is converted over a suitable catalyst at elevated temperature and pressure into paraffinic compounds ranging from methane to high molecular weight hydrocarbons comprising up to 200 carbon atoms, or, under particular circumstances, even more.

Numerous types of reactor systems have been developed for carrying out the Fischer-Tropsch reaction. For example, Fischer-Tropsch reactor systems include fixed bed reactors, especially multi-tubular fixed bed reactors, fluidised bed reactors, such as entrained fluidised bed reactors and fixed fluidised bed reactors, and slurry bed reactors such as three-phase slurry bubble columns and ebullated bed reactors.

The Fischer-Tropsch reaction is very exothermic and temperature sensitive. In consequence, careful temperature control is required to maintain optimum

operation conditions and desired hydrocarbon product selectivity. Indeed, close temperature control and operation throughout the reactor are major objectives.

One object of the invention is to provide a reactor system that enables a Fischer-Tropsch reaction to be carried out in a more efficient manner resulting in an improved hydrocarbon product selectivity. Another object of the invention is to provide a reactor in which the catalyst is less quickly deactivated.

Summary of the invention

It has now been found that this can be established when use is made of different cooling media in different parts of the reactor.

Accordingly, the present invention relates to a multi-tubular fixed bed reactor for preparing hydrocarbons comprising a plurality of reactor tubes which include a fixed bed of catalyst particles, which tubes are at least partially surrounded by one or more cooling media, wherein the temperature of one or more cooling media present in the upstream part of the reactor is at least 5 °C lower that the temperature of one or more cooling media present in the downstream part of the reactor.

The present invention establishes an improved and very attractive hydrocarbon product selectivity in terms of $C_5^+$ products. This is due to the fact that the catalytic activity in the reactor differs less along the length of the reactor tube than is the case in conventional Fischer-Tropsch reactors. Moreover, the lifetime of the catalyst to be used can attractively be extended.

Preferably, in the reactor according to the present invention the temperature of the one or more cooling media present in the upstream part of the reactor is 10-40 °C lower than the temperature of the one or more cooling media present in the downstream part of the reactor. More preferably, the temperature of the one or more cooling media present in the upstream part of the reactor is 15-35 °C lower than the temperature of the one or more cooling media present in the downstream part of the reactor.

In accordance with the present invention any known cooling medium can be used provided that the temperature of the one or more cooling media used in the upstream part of the reactor is lower than the temperature of the one or more cooling media used in the downstream part of the reactor. Cooling media that can be used in accordance with the present invention include known heat transfer fluids such as water, salt solutions such as for example lithium bromide solutions, oils, liquid mercury, ammonia, mixtures of water and ammonia, light hydrocarbons, and mixtures of light hydrocarbons.

Suitably, the one or more cooling media present in the upstream part of the reactor are selected from the group consisting of hydrocarbons having 5-14 carbon atoms or mixtures thereof, water, ammonia, mixtures of water and ammonia, and oils.

Suitably, the one or more cooling media present in the downstream part of the reactor is/are selected from the group consisting of hydrocarbons having 5-12 carbon atoms or mixtures thereof, liquid mercury, water, lithium bromide solutions, and oils.

Suitable examples of hydrocarbons having 5-12 carbon atoms that can be used as a cooling medium include pentane, hexane, heptane, octane, nonane, decane, undecane, dodecane, and mixtures thereof.

Preferably, the density of the one or more cooling media present in the upstream part of the reactor is lower than the density of the one or more cooling media present in the downstream part of the reactor.

In a particular embodiment of the present invention one or more further cooling media are present between the one or more cooling media present in the upstream part of the reactor and the one or more cooling media present in the downstream part of the reactor, whereby the temperature of the one or more further cooling media is (i) higher than the temperature of the one or more cooling media present in the upstream part of the reactor and (ii) lower than the temperature of the one or more cooling media present in the downstream part of the reactor.

The multi-tubular fixed bed reactor in accordance with the present invention is particularly suitable for carrying out a Fischer-Tropsch reaction. Accordingly, the catalyst particles preferably comprise Fischer-Tropsch catalyst particles. The reactor tubes of the present reactor preferably comprise a fixed bed of Fischer-Tropsch catalyst particles in which all catalyst particles comprise the same metal as catalytically active metal. It is however also possible to have a different type of catalytically active metal in the catalyst particles at the upstream end of the fixed bed as compared to the catalyst particles in the rest of the fixed bed.Further, the surface area of catalytically active metal may vary along the length of the fixed bed, and the concentration of catalytically active metal in the upstream end of the fixed bed may be lower than in the downstream end. A conventional catalyst bed used for this comparison is a fixed bed in a reactor tube whereby the intrinsic catalytic activity per volume unit in the upstream end of the fixed bed is the same or similar to the intrinsic catalytic activity in the remaining fixed bed volume. The increase in peak temperature in a catalyst bed in a reactor tube according to the present invention is especially lower as compared to a peak temperature observed for a high-speed stop applied to a catalyst bed in which the intrinsic catalytic activity per volume unit in the upstream end of the fixed bed is higher than the intrinsic activity in the remaining fixed bed volume.

The reactor tubes comprising a fixed bed of Fischer-Tropsch catalyst particles may be filled partly with the catalyst bed, and the other part may be empty. For example, some empty space may be present in the reactor tube above and below the catalyst bed.

The "fixed bed volume" of a fixed bed in a reactor tube is defined as the inner volume of that part of the reactor tube where the fixed bed of catalyst particles is present. This volume thus includes the volume taken by the catalyst particles. For example, when a cylindrical reactor tube with a height (or length) of 12 meters and an inner diameter of 2 cm contains a fixed bed of catalyst particles over a length of 11 meters, the fixed bed volume is the inner volume of the reactor tube along these 11 meters, which is:

$$\text{height} * \pi * (\text{radius})^2 = 11 \text{ meters} * \pi * (1 \text{ cm})^2.$$

As mentioned above, a reactor tube may be partially filled with a fixed bed of catalyst particles. Preferably the reactor tube contains a fixed bed of catalyst particles over at least 85% of the length of the reactor tube, more preferably over at least 90%. Preferably the reactor tube contains a fixed bed of catalyst particles over at most 97% of the length of the reactor tube, more preferably over at most 95%. The total fixed bed volume thus preferably is at least 85%, more preferably at least 90% of the total inner volume of a reactor tube. The total fixed bed volume preferably is at most 97%, more preferably at most 95% of the total inner volume of a reactor tube.

The shape of the catalyst particles used in the present invention may be regular or irregular. The dimensions are suitably 0.1-30 mm in all three directions, preferably 0.1-20 mm in all three directions, more in particular 0.1-6 mm. The particles may comprise a carrier material and a catalytically active metal. The particles may additionally comprise a support, for example a metal support. Suitable catalyst particles comprising a metal support are, for example, described in US20090270518. Suitable shapes are spheres, pellets, rings and, in particular, extrudates. Suitable ring shapes are, for example, described in US20090134062.

Extrudates suitably have a length between 0.5 and 30 mm, preferably between 1 and 6 mm. Extrudates may be cylindrical, polylobal, or have any other shape. Their effective diameter, i.e. the diameter of a sphere with the same outer surface over inner volume ratio, is suitably in the range of 0.1 to 10 mm, more in particular in the range of 0.2-6 mm.

The catalysts used in a Fischer-Tropsch reaction often comprise a carrier based support material and one or more metals from Groups 8-10 of the Periodic Table, especially from the cobalt or iron groups, optionally in combination with one or more metal oxides and/or metals as promoters selected from zirconium, titanium, chromium, vanadium and manganese, especially manganese. Such catalysts are known in the art and have been described for example, in the specifications of WO9700231A and US4595703. A most suitable catalyst comprises cobalt as the catalytically active metal and titania as carrier material.

The catalyst may further comprise one or more promoters. One or more metals or metal oxides may be present as promoters, more particularly one or more d-metals or d-metal oxides. Suitable metal oxide promoters may be selected from Groups 2-7 of the Periodic Table of Elements, or the actinides and lanthanides. In particular, oxides of magnesium, calcium, strontium, barium, scandium, yttrium, lanthanum, cerium, titanium, zirconium, hafnium, thorium, uranium, vanadium, chromium and manganese are most suitable promoters. Suitable metal promoters may be selected from Groups 7-10 of the Periodic Table of Elements. Manganese, iron, rhenium and Group 8-10 noble metals are particularly suitable as promoters, and are preferably provided in the form of a salt or hydroxide.

The promoter, if present in the catalyst, is typically present in an amount of from 0.001 to 100 parts by weight per 100 parts by weight of carrier material, preferably 0.05 to 20, more preferably 0.1 to 15. It will however be appreciated that the optimum amount of promoter may vary for the respective elements which act as promoter.

A most suitable catalyst comprises cobalt as the catalytically active metal and zirconium as a promoter. Another most suitable catalyst comprises cobalt as the catalytically active metal and manganese and/or vanadium as a promoter. If the catalyst comprises cobalt as the catalytically active metal and manganese and/or vanadium as promoter, the cobalt: (manganese + vanadium) atomic ratio is advantageously at least 12:1.

References to "Groups" and the Periodic Table as used herein relate to the new IUPAC version of the Periodic Table of Elements such as that described in the 87th Edition of the Handbook of Chemistry and Physics (CRC Press).

In a preferred embodiment the reactor tubes have a ratio between length and diameter of at least 5, in particular at least 50. This ratio can suitably be up to 1200.

The reactor tubes in a multi-tubular fixed bed reactor generally have a diameter in the range of 0.5-20 cm, more in particular in the range of 1 to 15 cm. They generally have a length in the range of 3 to 30 m. The number of reactor tubes in a multi-tubular fixed bed reactor is not critical to the present invention and may vary in wide ranges, for example in the range of 4 to 50.000, more in particular in the range of 10 to 40.000.

Multi-tubular fixed bed reactors and their use in Fischer-Tropsch processes are known in the art and require no further elucidation here.

The present invention relates to a multi-tubular fixed bed reactor suitable for carrying out catalytic processes, particularly, but not exclusively exothermic reactions such as the Fischer-Tropsch process. Hence, the present invention also relates to the use of a multi-tubular fixed bed reactor according to the present invention for performing a process for preparing hydrocarbons, preferably a Fischer-Tropsch process.

In addition, the present invention provides a process for preparing hydrocarbons in which a multi-tubular fixed bed reactor is applied in accordance with the present invention. Preferably, such a process is a Fischer-Tropsch process.

Accordingly, the present invention preferably relates to a process which comprises the steps of providing a synthesis gas to the multi-tubular fixed bed reactor of which the tubes include Fischer-Tropsch catalyst particles, maintaining the reactor at reaction temperature, introducing into and withdrawing from the reactor one or more cooling media, wherein the temperature of one or more cooling media present in the upstream part of the reactor is at least 5 °C lower that the temperature of one or more cooling media present in the downstream part of the reactor, and withdrawing from the reactor a reaction product. An advantage of the present process is that it is possible to obtain a higher selectivity during the Fischer-Tropsch process due to the fact that a better temperature profile over the catalyst bed in the reactor tubes is obtained during the Fischer-Tropsch process.

Preferably, in the present process one or more cooling media are introduced into and withdrawn from the upstream part of the reactor one or more cooling media, and one or more cooling media are introduced into and withdrawn from the downstream part of the reactor. Preferably, in the present process the temperature of the one or more cooling media present in the upstream part of the reactor is 10-40 °C lower, more preferably 15-35 °C lower than the temperature of the one or more cooling media present in the downstream part of the reactor.

In accordance with the present invention any known cooling medium can be used provided that the temperature of the one or more cooling media used in the upstream part of the reactor is lower than the temperature of the one or more cooling media used in the downstream part of the reactor. Cooling media that can be used in accordance with the present invention include known heat transfer fluids such as water, salt solutions such as for example lithium bromide solutions, oils, ammonia, mixtures of water and ammonia, liquid mercury, light hydrocarbons, and mixtures of light hydrocarbons.

Preferably, in the present process the density of the one or more cooling media present in the upstream part of the reactor is lower than the density of the one or more cooling media present in the downstream part of the reactor.

In the process according to the present invention in the upstream part and downstream part of the reactor the one or more cooling media can be used as mentioned hereinbefore. Hence, the one or more cooling media present in the upstream part of the reactor can suitably be selected from the group consisting of hydrocarbons having 5-14 carbon atoms or mixtures thereof, water, ammonia, mixtures of water and ammonia, and oils.

The one or more cooling media present in the downstream part of the reactor can suitably be selected from the group consisting of hydrocarbons having 5-12 carbon atoms or mixtures thereof, liquid mercury, water, lithium bromide solutions, and oils.

Suitable examples of hydrocarbons having 5-12 carbon atoms that can be used as a cooling medium include pentane, hexane, heptanes, octane, nonane, decane, undecane, dodecane, and mixtures thereof.

In one embodiment of the present invention in both the upstream and downs stream part of the reactor use is made of undecane as the cooling medium. In the downstream part of the reactor the temperature is 217 °C and the pressure is 2.5 bara, whereas in the upstream part of the reactor the temperature is 200 °C and the pressure is 1.8 bara. Undecane is introduced into the downstream part of the reactor. From the downstream part the undecane flows inside the reactor to the upstream part of the reactor where undecane is withdrawn from the reactor and recycled to the downstream part of the reactor. Before undecane is recycled vapours of undecane can suitably be condensed in an external steam generator.

In one embodiment of the present invention in both the upstream and downs stream part of the reactor use is made of decane as the cooling medium. In the downstream part of the reactor the temperature is 223 °C and the pressure is 2.9 bara, whereas in the upstream part of the reactor the temperature is 210 °C and the pressure is 2.2 bara. Decane is introduced into the downstream part of the reactor. Inside the reactor decane flows from the downstream part of the reactor to the upstream part of the reactor. From the upper part of the reactor decane is withdrawn from the reactor and recycled to the downstream part of the reactor. Before decane is recycled vapours of the decane can suitably be condensed in an external steam generator.

In one embodiment of the present invention in the upstream part of the reactor use is made of a mixture of pentane and hexane as the cooling medium and in the downstream part of the reactor use is made of water as the cooling medium. In the downstream part of the reactor the temperature is 225 °C and the pressure is 25 bara, whereas in the upstream part of the reactor the temperature is 200 °C and the pressure is 25 bara. The mixture of pentane and hexane is introduced into a middle part of the reactor. The mixture of pentane and hexane flows inside the reactor to the upstream part of the reactor where the mixture is withdrawn from the reactor and recycled to the middle part of the reactor. Water is introduced into the downstream part of the reactor. Water flows inside the reactor to the upstream part of the reactor where it is withdrawn from the reactor together with pentane and hexane. Water is separated from pentane and hexane and the water is recycled to the downstream part of the reactor.

In one embodiment of the present invention in the upstream part of the reactor use is made of a mixture of light hydrocarbons that mainly contains pentane and hexane as the cooling medium and in the downstream part of the reactor use is made of a mixture of light hydrocarbons that mainly contains hexane and heptane as the cooling medium. In the downstream part of the reactor the temperature is 230 °C and the pressure is 25 bara, whereas in the upstream part of the reactor the temperature is 200 °C and the pressure is 24 bara. A mixture of light hydrocarbons comprising pentane, hexane and heptane is introduced into an upstream part of the reactor. From a higher located upstream part of the reactor this mixture is withdrawn from the reactor and recycled to the downstream part of the reactor. Before the mixture is recycled vapours can suitably be condensed in an external steam generator. Due to internal distillation during operation in the upstream part of the reactor a mixture of light hydrocarbons that mainly contains pentane and hexane is obtained, whereas in the downstream part of the reactor a mixture of light hydrocarbons that mainly contains hexane and heptane is obtained.

In one embodiment of the present invention in the upstream part of the reactor use is made of water as the cooling medium, whereas in the downstream part of the reactor use is made of a solution of an aqueous lithium bromide as the cooling medium. In the downstream part of the reactor the temperature is 230 °C and the pressure is 16.5 bara, whereas in the upstream part of the reactor the temperature is 200 °C and the pressure is 15.5 bara. The lithium bromide solution is introduced in the downstream part of the reactor. In the downstream part the lithium bromide solution can be kept by means of for instance a baffle plate. Water is introduced in the reactor above the baffle plate. Steam generated in the upstream part can be withdrawn and passed to an external steam generator and water obtained in the steam generator can be recycled to the reactor above the baffle plate.

In one embodiment of the present invention in the upstream part of the reactor use is made of water as the cooling medium, whereas in the downstream part of the reactor use is made of a heavy heat transfer fluid such as for example DOWTHERM A as the cooling medium. Due to the density difference of the cooling media used the temperature of the cooling medium in the upstream part of the reactor will be lower than the temperature of the cooling medium in the downstream part of the reactor. The cooling medium in the downstream part can suitably be kept in the downstream part by means of for instance a baffle plate, whereas steam generated in the downstream part can be transported by way of a baffle arrangement to an external steam generator and water obtained in the steam generator can be recycled to the upstream part of the reactor.

In one embodiment of the present invention in the upstream part of the reactor use is made of a mixture of hexane and water as the cooling medium, whereas in the downstream part of the reactor use is made of water as the cooling medium. In the downstream part of the reactor the temperature is 225 °C and the pressure is 25 bara, whereas in the upstream part of the reactor the temperature is 200 °C and the pressure is 25 bara. The mixture of hexane and water is introduced into a middle part of the reactor. The mixture of water and hexane flows inside the reactor to the upstream part of the reactor where the mixture is withdrawn from the reactor and recycled to the middle part of the reactor. Water is introduced into the downstream part of the reactor. Water flows inside the reactor to the upstream part of the reactor where it is withdrawn with steam from the reactor together with hexane. Water is at least partly separated from hexane and water is recycled to the downstream part of the reactor.

In one embodiment of the present invention in the upstream part of the reactor use is made of a mixture of water and ammonia as the cooling medium, whereas in the downstream part of the reactor use is made of water as the cooling medium. In the downstream part of the reactor the temperature is 225 °C and the pressure is 25 bara, whereas in the upstream part of the reactor the temperature is 200 °C and the pressure is 25 bara. The mixture of water and ammonia is introduced into a middle part of the reactor. The mixture of water and ammonia flows inside the reactor to the upstream part of the reactor where the mixture is withdrawn from the reactor and recycled to the middle part of the reactor. Water is introduced into the downstream part of the reactor. Water flows inside the reactor to the upstream part of the reactor where it is withdrawn with steam from the reactor together with ammonia. Water is at least partly separated from ammonia and water is recycled to the downstream part of the reactor.

In another embodiment of the present invention in the upstream part of the reactor use is made of water as the cooling medium, whereas in the downstream part of the reactor use is made of liquid mercury as the cooling medium. In the downstream part of the reactor the temperature is 220-240 °C and the pressure is 15.5 bara, whereas in the upstream part of the reactor the temperature is 200 °C and the pressure is 15.5 bara. Liquid mercury will be introduced in the downstream part of the reactor. The mercury can be withdrawn and passed to an external steam generator before it is recycled to the downstream part of the reactor. Water is introduced in a middle part of the reactor from where it flows to the upstream part of the reactor. Steam and water can be withdrawn from the upstream part of the reactor and passed to an external steam generator before water is recycled to the middle part of the reactor.

In one embodiment of the present invention in both the upstream part and downstream part of the reactor use is made of water as the cooling medium. In the downstream part of the reactor the temperature is 220 °C and the pressure is 55 bara, whereas in the upstream part of the temperature is 200 °C and the pressure is 60 bara. The water flows from the upstream part of the reactor to the downstream part of the reactor. Water and steam generated can be withdrawn from in the downstream part can be transported by way of a baffle arrangement to an external steam generator before water is recycled to the upstream part of the reactor.

In one embodiment of the present invention in the upstream part of the reactor use is made of a hot oil as the cooling medium, whereas in the downstream part of the reactor use is made of the same hot oil as the cooling medium. In the downstream part of the reactor the temperature is 230 °C and the pressure is 30 bara, whereas in the upstream part of the reactor the temperature is 200 °C and the pressure is 30 bara. The hot oil will flow from the upstream part of the reactor to the downstream part of the reactor. Hot oil from the downstream part of the reactor can be transported by way of a baffle arrangement to an external steam generator and oil obtained in the steam generator can be recycled to the upstream part of the reactor.

In the above embodiments use is made of a reactor having a length of 12 meters.

Upstream and downstream parts of the reactor are defined herein with respect to the flow of the syngas, i.e. the flow of the mixture of hydrogen and carbon monoxide, in a Fischer Tropsch reactor. Reference herein to the upstream end of the reactor is thus to the end of the reactor to which the syngas is supplied during Fischer Tropsch reaction. Reference herein to the downstream end of the reactor is to the other end. The Fischer-Tropsch reaction is preferably carried out at a temperature in the range from 125 to 400 °C, more preferably 175 to 300 °C, most preferably 200 to 260 °C. The pressure preferably ranges from 5 to 150 bara, more preferably from 20 to 80 bara. The gaseous hourly space velocity may vary within wide ranges and is typically in the range from 500 to 10000 Nl/l/h, preferably in the range from 1500 to 4000 Nl/l/h. The hydrogen to CO ratio of the feed as it is fed to the catalyst bed generally is in the range of 0.5:1 to 2:1.

Products of the Fischer-Tropsch synthesis may range from methane to heavy hydrocarbons. Preferably, the production of methane is minimised and a substantial portion of the hydrocarbons produced have a carbon chain length of a least 5 carbon atoms. Preferably, the amount of C5+ hydrocarbons is at least 60% by weight of the total product, more preferably, at least 70% by weight, even more preferably, at least 80% by weight, most preferably at least 85% by weight. The CO conversion of the overall process is preferably at least 50%.

The products obtained via the process according to the invention can be processed through hydrocarbon conversion and separation processes known in the art to obtain specific hydrocarbon fractions. Suitable processes are for instance hydrocracking, hydroisomerisation, hydrogenation and catalytic dewaxing. Specific hydrocarbon fractions are for instance LPG, naphtha, detergent feedstock, solvents, drilling fluids, kerosene, gasoil, base oil and waxes.

It will be understood that it is within the scope of the skilled person to determine and select the most appropriate conditions for a specific reactor configuration and reaction regime.

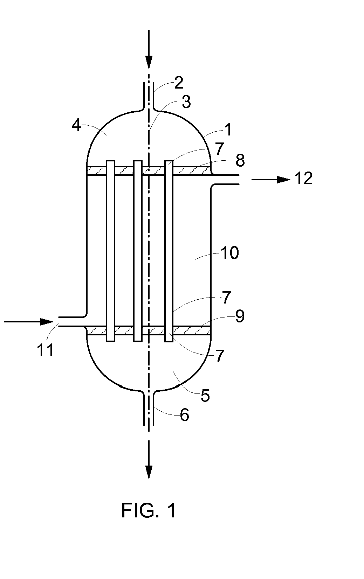

In Figure 1 a multi-tubular fixed bed reactor in accordance with the present invention is schematically shown. In Figure 1 a multi-tubular reactor (1) for carrying out a Fischer-Tropsch process is depicted. The reactor (1) comprises an inlet (2) which is symmetrically arranged with respect to the central axis (3) of the reactor for introducing a syngas into the upstream part (4) of the reactor. Fischer-Tropsch hydrocarbon product is withdrawn from a Fischer-Tropsch hydrocarbon product collecting chamber (5) of the reactor by means of outlet mean (6) which is symmetrically arranged with respect to its central longitudinal axis (3). A plurality of openended reactor tubes (7) is arranged in the reactor parallel to axis (3) of which the upper ends are fixed to an upper tube sheet or plate (8) in the upstream part of the reactor and in fluid communication with inlet means (2) above the upper tube sheet or plate and of which the lower ends are fixed to a lower tube sheet or plate (9)in the downstream part of the reactor (10) and in fluid communication with the Fischer-Tropsch hydrocarbon product collecting chamber (5) below the lower tube sheet or plate (9). The collecting chamber (5) communicates with outlet means (6) for withdrawing the hydrocarbon product from the reactor. The reaction tubes contain particles of a Fischer-Tropsch catalyst. The reactor further comprises inlet means (11) for introducing a cooling medium into the downstream part of the reactor and outlet means (12) for withdrawing cooling medium from the upstream part of the reactor

**Claims**

1. A multi-tubular fixed bed reactor for preparing hydrocarbons comprising a plurality of reactor tubes which include a fixed bed of catalyst particles, which tubes are at least partially surrounded by one or more cooling media, wherein the temperature of one or more cooling media present in the upstream part of the reactor is at least 5 °C lower that the temperature of one or more cooling media present in the downstream part of the reactor.

2. A reactor according to claim 1, wherein the temperature of the one or more cooling media present in the upstream part of the reactor is 10-40°C lower than the temperature of the one or more cooling media present in the downstream part of the reactor.

3. A reactor according to claim 2, wherein the temperature of the one or more cooling media present in the upstream part of the reactor is 15-35°C lower than the temperature of the one or more cooling media present in the downstream part of the reactor.

4. A reactor according to any one of claims 1-3, wherein the one or more cooling media present in the upstream part of the reactor is/are selected from the group consisting of hydrocarbons having 5-14 carbon atoms or mixtures thereof, water, ammonia, mixtures of water and ammonia, and oils

5. A reactor according to any one of claims 1-5, wherein the one or more cooling media present in the downstream part of the reactor is/are selected from the group consisting of hydrocarbons having 5-12 carbon atoms or mixtures thereof, liquid mercury, water, salt solutions, and oils.

6. A reactor according to any one of claims 1-5, wherein the density of the one or more cooling media present in the upstream part of the reactor is lower than the density of the one or more cooling media present in the downstream part of the reactor.

7. A reactor according to any one of claims 1-6, wherein one or more further cooling media are present between the one or more cooling media present in the upstream part of the reactor and the one or more cooling media present in the downstream part of the reactor, and wherein the temperature of the one or more further cooling media is (i) higher than the temperature of the one or more cooling media present in the upstream part of the reactor and (ii) lower than the temperature of the one or more cooling media present in the downstream part of the reactor.

8. A reactor according to any one of claims 1-7, wherein the catalyst particles comprise Fischer-Tropsch catalyst particles.

9. Use of a multi-tubular fixed bed reactor according to any one of claim 1-8 for performing a process for preparing hydrocarbons.

10. Use according to claim 9 for performing a Fischer-Tropsch process.

11. A process for preparing hydrocarbons in which a multi-tubular fixed bed reactor is applied as defined in any one of claims 1-8.

12. A process according to claim 11 which is a Fischer-Tropsch process.

13. A process according to claim 12 comprising the steps of providing a synthesis gas to the multi-tubular fixed bed reactor of which the tubes include Fischer-Tropsch catalyst particles, maintaining the reactor at reaction temperature, introducing into and withdrawing from the reactor one or more cooling media, wherein the temperature of one or more cooling media present in the upstream part of the reactor is at least 5 °C lower that the temperature of one or more cooling media present in the downstream part of the reactor, and withdrawing from the reactor a reaction product.

14. A process according to claim 13, wherein one or more cooling media are introduced into and withdrawn from the upstream part of the reactor one or more cooling media, and one or more cooling media are introduced into and withdrawn from the downstream part of the reactor.

15. A process according to claim 13 or 14, wherein the temperature of the one or more cooling media present in the upstream part of the reactor is 10-40°C lower than the temperature of the one or more cooling media present in the downstream part of the reactor.

FIG. 1

Europäisches
Patentamt

European
Patent Office

Office européen
des brevets

# EUROPEAN SEARCH REPORT

Application Number

EP 10 19 6716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 353 600 A (SWEETSER SUMNER B) 11 July 1944 (1944-07-11) * the whole document * ----- | 1-15 | INV. B01J8/06 |
| X | US 2004/192989 A1 (ESPINOZA RAFAEL L [US] ET AL) 30 September 2004 (2004-09-30) * the whole document * ----- | 1-14 | |
| X | EP 1 547 994 A1 (MITSUBISHI CHEM CORP [JP]) 29 June 2005 (2005-06-29) * paragraph [0024] - paragraph [0025]; figures 1,5 * ----- | 1-7 | |
| X | EP 1 080 781 A1 (NIPPON CATALYTIC CHEM IND [JP]) 7 March 2001 (2001-03-07) * paragraph [0032] - paragraph [0034]; figure 1 * ----- | 1-7 | |
| X | WO 02/26370 A1 (SHELL INT RESEARCH [NL]; TE RAA AREND JAN [NL]; SLAPAK MATHIAS JOZEF P) 4 April 2002 (2002-04-04) * page 5, line 27 - line 33 * * page 13, line 18 - line 25; figure 1 * ----- | 1-7 | TECHNICAL FIELDS SEARCHED (IPC) B01J |

The present search report has been drawn up for all claims

| Place of search | Date of completion of the search | Examiner |
|---|---|---|
| The Hague | 8 March 2011 | Vlassis, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 19 6716

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2011

| Patent document cited in search report | | Publication date | Patent family member(s) | | Publication date |
|---|---|---|---|---|---|
| US 2353600 | A | 11-07-1944 | NONE | | |
| US 2004192989 | A1 | 30-09-2004 | AU | 2004223835 A1 | 07-10-2004 |
| | | | WO | 2004085575 A2 | 07-10-2004 |
| | | | ZA | 200507230 A | 27-12-2006 |
| EP 1547994 | A1 | 29-06-2005 | AU | 2003254954 A1 | 11-03-2004 |
| | | | BR | 0313143 A | 12-07-2005 |
| | | | CN | 1675161 A | 28-09-2005 |
| | | | ES | 2327516 T3 | 30-10-2009 |
| | | | WO | 2004018403 A1 | 04-03-2004 |
| | | | JP | 4145607 B2 | 03-09-2008 |
| | | | JP | 2004083430 A | 18-03-2004 |
| | | | RU | 2331628 C2 | 20-08-2008 |
| | | | US | 2005148793 A1 | 07-07-2005 |
| EP 1080781 | A1 | 07-03-2001 | BR | 0003855 A | 03-04-2001 |
| | | | CN | 1289635 A | 04-04-2001 |
| | | | DE | 60026794 T2 | 18-01-2007 |
| | | | KR | 20010050268 A | 15-06-2001 |
| | | | US | 6613940 B1 | 02-09-2003 |
| | | | ZA | 200004211 A | 14-02-2001 |
| WO 0226370 | A1 | 04-04-2002 | AT | 271418 T | 15-08-2004 |
| | | | AU | 1590602 A | 08-04-2002 |
| | | | DE | 60104439 D1 | 26-08-2004 |
| | | | DE | 60104439 T2 | 13-01-2005 |
| | | | EP | 1326706 A1 | 16-07-2003 |
| | | | JP | 2004509738 T | 02-04-2004 |
| | | | TW | 280154 B | 01-05-2007 |
| | | | US | 2004096378 A1 | 20-05-2004 |
| | | | US | 2007122322 A1 | 31-05-2007 |

EPO FORM P0459

For more details about this annex : see Official Journal of the European Patent Office, No. 12/82

**EP 2 468 394 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090270518 A
- US 20090134062 A
- WO 9700231 A
- US 4595703 A

**Non-patent literature cited in the description**

- Handbook of Chemistry and Physics. CRC Press